# FASCICULE DE BREVET EUROPEEN

(11) **EP 2 529 996 B1**
(45) Date de publication et mention de la délivrance du brevet: **07.08.2013**
(21) Numéro de dépôt: 12169083.8
(22) Date de dépôt: 23.05.2012
(51) Int. Cl.: B62D 7/14, B60R 25/02

(54) **Dispositif de blocage pour système de direction de véhicule automobile**
Blockiervorrichtung für ein Lenksystem eines Kraftfahrzeugs
Locking device for a steering system of a motor vehicle

(30) Priorité: 30.05.2011 FR 1154688
(43) Date de publication de la demande: 05.12.2012
(73) Titulaire: Jtekt Europe, 69540 Irigny (FR)
(72) Inventeur: Chauvrat, Philippe, 01480 VILLENEUVE (FR); Plateret, Nicolas, 69630 CHAPONOST (FR); Rey, Laurent, 69100 VILLEURBANNE (FR); Fauritte, François, 69003 LYON (FR); Brochot, Patrice, 69600 OULLINS (FR)
(74) Mandataire: Chevalier, Renaud Philippe

(56) Documents cités:
- EP-A1- 0 995 649
- JP-A- 61 054 360

## Description

La présente invention se rapporte, d'une manière générale, aux systèmes de direction des véhicules automobiles. Cette invention s'intéresse, plus particulièrement, à un dispositif de blocage pour système de direction. Encore plus particulièrement, l'invention vise un dispositif de blocage adapté à un système de direction agissant sur les roues arrière d'un véhicule automobile.

Les véhicules automobiles sont habituellement équipés d'un dispositif de blocage de leur système de direction, qui fait généralement office de dispositif antivol, empêchant l'usage du véhicule par une personne non autorisée.

En particulier, on connaît des dispositifs de blocage mécaniques ou électromécaniques, qui maintiennent le volant de conduite dans une position angulaire fixe et qui par conséquent maintiennent les roues directrices du véhicule, en particulier les roues avant, dans une orientation fixe. Ceci a pour résultat une impossibilité de diriger, donc de déplacer le véhicule.

Des dispositifs de blocage de direction trouvent aussi une application, avec une finalité différente, sur les véhicules automobiles qui possèdent des roues arrière directrices. Sur de tels véhicules, le système de direction agissant sur les roues arrière remplit une fonction d'aide à la conduite lors des manoeuvres de stationnement ou lors d'autres situations particulières dans lesquelles peut se trouver le véhicule. Cependant, lorsque la vitesse du véhicule est supérieure à une certaine valeur, il faut le plus souvent limiter ou même annuler les mouvements d'orientation des roues arrière. Un tel blocage peut être obtenu par diverses solutions, telles que le blocage du moteur d'assistance dans le cas d'un système de direction arrière assistée, ou le blocage des pivots des roues arrière.

Une difficulté rencontrée dans ce cas est de réaliser un blocage permettant de conserver une raideur du train de roulement arrière qui soit suffisante pour garantir un comportement routier sûr du véhicule.

D'une manière classique, le blocage d'une direction, sur le train avant d'un véhicule automobile, s'effectue au moyen d'une pièce mécanique mobile qui vient bloquer la rotation de la colonne de direction. Le dimensionnement de cette pièce mécanique est tributaire de son environnement sur le véhicule et des dimensions de la colonne de direction. Ainsi, il reste souvent possible, avec un effort manuel suffisamment élevé, de rompre le blocage réalisé par une telle pièce mécanique et de libérer tout le système de direction.

Dans le cas d'un véhicule à roues arrière directrices, ce genre de blocage ne peut être utilisé en raison de l'absence de colonne de direction agissant directement sur le train de roulement arrière. Cependant, certaines solutions de blocage mécanique pourraient être appliquées à des roues arrière directrices, par exemple le blocage d'un pignon ou d'une roue dentée d'un réducteur à engrenages par l'intermédiaire duquel s'effectuerait l'orientation des roues arrière.

Toutefois, la rigidité du train de roulement arrière serait dans ce dernier cas directement liée à la rigidité du moyen de blocage. Là aussi, compte tenu de la configuration des systèmes de direction, ce moyen serait de petites dimensions donc peu raide et peu robuste.

D'autres solutions de blocage sont envisageables, notamment pour des directions assistées électriques dans lesquelles un courant électrique injecté dans le moteur d'assistance permet de s'opposer à l'orientation des roues et de bloquer ainsi la direction -voir par exemple le document de brevet DE 10 2006 001357.

Cependant, dans le cas d'une direction agissant sur les roues arrière, pour laquelle le blocage des roues arrière possède un caractère sécuritaire, une telle solution nécessiterait de nombreuses redondances électroniques, qui peuvent s'avérer onéreuses.

Enfin, on connaît des solutions de blocage de type hydraulique, nécessairement associées à une direction assistée hydraulique. Ainsi, le document de brevet FR 2 845 056 prévoit, sur la valve d'assistance, un organe mobile qui est déplaçable au moyen d'un petit vérin hydraulique et qui réalise le blocage d'une partie mobile du système de direction. Le brevet US 5893428 prévoit un blocage hydraulique du vérin d'assistance. Le document de brevet EP 0995649 prévoit un blocage du vérin d'assistance par des électrovannes, placées sur les conduits hydrauliques qui relient le vérin d'assistance à la pompe et au réservoir de fluide hydraulique. Le document de brevet JP 61-054360 fournit une solution analogue, avec moyens de réglage électromagnétiques, toutefois destinée à ajuster le débit de fluide hydraulique et les propretés d'amortissement, et non pas pour une fonction de blocage antivol de la direction.

De telles solutions sont envisageables seulement pour des directions à assistance hydraulique, et elles ne sont pas conçues pour un blocage obligatoire de la direction en son point milieu, ce qui est une nécessité dans le cas d'une direction agissant sur les roues arrière.

La présente invention vise à remédier aux inconvénients ou insuffisances des diverses solutions existantes, rappelées ci-dessus, et elle a donc pour but de fournir une solution de blocage de direction, utilisable pour tout système de direction à crémaillère, avec assistance hydraulique ou électrique ou même sans assistance, soit en tant que dispositif antivol agissant efficacement sur des roues directrices avant, soit en tant que dispositif de blocage agissant sur des roues directrices arrière, et constituant dans ce dernier cas un dispositif de blocage avec une raideur importante, imposant un blocage fiable de la direction en son point milieu.

A cet effet, l'invention a pour objet un dispositif de blocage pour système de direction à crémaillère de véhicule automobile, le dispositif étant prévu pour empêcher temporairement le mouvement d'orientation d'une paire de roues directrices en imposant une position fixe à une crémaillère associée à cette paire de roues directrices, et ce dispositif étant caractérisé par le fait qu'il comprend un cylindre fixe rempli d'un fluide incompressible, en particulier d'huile, traversé axialement par une tige mobile porteuse d'un piston monté coulissant dans le cylindre, la tige formant une portion de la crémaillère ainsi entourée par le cylindre, ou ce cylindre s'étendant parallèlement à la crémaillère avec la tige liée à la crémaillère, des canaux de communication avec des moyens anti-retour et/ou de blocage commandé de la circulation du fluide étant prévus en particulier :
- entre les deux zones d'extrémité du cylindre,
- entre la zone centrale du cylindre et l'une de ses zones d'extrémité,
- entre la zone centrale du cylindre et son autre zone d'extrémité, de manière à ne permettre le déplacement de la tige que vers une position médiane, c'est-à-dire une position dans laquelle le piston se situe dans la zone centrale du cylindre, le mouvement inverse étant empêché.

Dans une mode de réalisation préféré du dispositif de blocage pour système de direction, objet de l'invention :
- le canal de communication s'étendant entre les deux zones d'extrémité du cylindre comporte un moyen de blocage commandé de la circulation du fluide, ce moyen de blocage étant par exemple une électrovanne pilotée,
- le canal de communication s'étendant entre la zone centrale du cylindre et l'une des zones d'extrémité de ce cylindre comporte un clapet anti-retour, n'autorisant la circulation du fluide que de la zone centrale vers cette zone d'extrémité,
- le canal de communication s'étendant entre la zone centrale du cylindre et son autre zone d'extrémité comporte un clapet anti-retour, n'autorisant la circulation du fluide que de la zone centrale vers cette autre zone d'extrémité.

De préférence, le point de départ des deux derniers canaux de communication, situé dans la zone centrale du cylindre, est commun aux deux canaux, ce point de départ étant obturé par le piston parvenu dans sa position médiane.

Ainsi, le dispositif de blocage objet de l'invention utilise un « vérin », rempli d'huile ou d'un autre fluide incompressible approprié, auquel est associé un ensemble de canaux de communication avec des points de départ et d'aboutissement judicieusement choisis, l'un des canaux de communication comportant un moyen piloté de fermeture tandis que les deux autres canaux comportent des clapets anti-retour permettant de contrôler le sens d'écoulement du fluide. Dès que le blocage de direction est commandé, le canal de communication entre les deux zones d'extrémité du cylindre est obturé et la tige ne peut se déplacer que vers le point milieu ; une fois le piston parvenu au point milieu, plus aucun déplacement de fluide n'est possible, si bien que le système de direction est bloqué et le restera, jusqu'à l'annulation de la commande de ce blocage.

Comme on le comprend, un tel dispositif de blocage est constructivement et fonctionnellement indépendant du fait qu'il s'agit d'une direction assistée ou non, et de la présence ou non d'une colonne de direction si bien qu'il peut équiper aussi bien des roues directrices avant que des roues directrices arrière. Dans le cas de roues directrices avant, le dispositif de blocage constitue un dispositif antivol efficace, invisible depuis l'habitacle du véhicule, et indépendant de la colonne de direction et d'un éventuel système d'assistance de la direction. Dans le cas de roues directrices arrière, le dispositif de l'invention permet de bloquer temporairement l'orientation de ces roues arrière, avec une raideur importante.

On notera que la raideur dépend ici uniquement du taux de compressibilité de l'huile ou autre fluide « incompressible » utilisé, qui sera choisi en fonction des effets recherchés.

Le dispositif de blocage ne nécessite aucune pompe de mise en pression de l'huile, et il ne consomme pratiquement aucune énergie. En particulier, dans le fonctionnement en mode « directeur » (sans blocage), le canal de communication entre les deux zones d'extrémité du cylindre permet d'égaliser les pressions entre les deux chambres situées de part et d'autre du piston, quel que soit le sens de déplacement de la tige, donc de la crémaillère. Dans le fonctionnement en mode « blocage », le déplacement de la crémaillère donc du piston vers sa position médiane peut résulter des efforts des roues sur le système de direction, ou des mouvements imprimés manuellement au volant, ou encore de l'assistance de la direction.

L'invention sera mieux comprise à l'aide de la description qui suit, en référence au dessin schématique annexé représentant, à titre d'exemple, une forme d'exécution de ce dispositif de blocage :
Figure 1 est une vue extérieure d'un système de direction, équipé d'un dispositif de blocage conforme à la présente invention ;
Figure 2 est une vue en coupe longitudinale du système de direction de la figure 1 ;
Figure 3 est un schéma fonctionnel du dispositif de blocage seul, en mode « directeur » ;
Figure 4 est un schéma fonctionnel du même dispositif de blocage, en mode « blocage » avant atteinte de la position médiane du piston ;
Figure 5 est un schéma fonctionnel de ce dispositif de blocage, toujours en mode « blocage » mais après atteinte de la position médiane du piston.

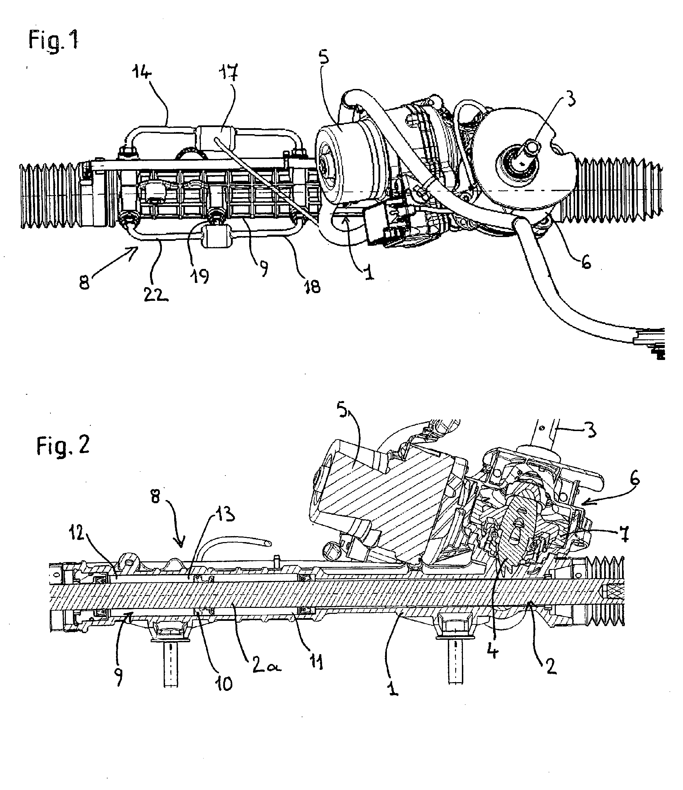

Les figures 1 et 2 représentent un système de direction à crémaillère, avec un carter de direction 1 de forme générale tubulaire, dans lequel une crémaillère 2 est montée coulissante en direction longitudinale.

Une colonne de direction, non représentée, est accouplée à un arbre d'entrée 3 lié en rotation à un pignon de direction 4, lui-même en prise avec la denture de la crémaillère 2.

S'agissant ici d'un système de direction assistée électrique, plus particulièrement avec assistance agissant au niveau du pignon de direction 4, ce système comprend encore un moteur électrique d'assistance 5 qui est accouplé, par l'intermédiaire d'un réducteur mécanique 6 à vis sans fin et roue tangente 7, au pignon de direction 4.

Les deux extrémités de la crémaillère 2, extérieures au carter de direction 1, sont liées respectivement à deux biellettes de direction (non représentées), elles-mêmes liées respectivement aux pivots des roues directrices droite et gauche du véhicule. Ainsi, la rotation de la colonne de direction, résultant du couple exercé sur le volant de conduite par le conducteur du véhicule et amplifié par le dispositif d'assistance, est transmise au pignon de direction 4 et convertie en un mouvement de translation de la crémaillère 2 qui, par l'intermédiaire des biellettes, provoque lui-même l'orientation des roues directrices du véhicule, pour un braquage à droite ou à gauche.

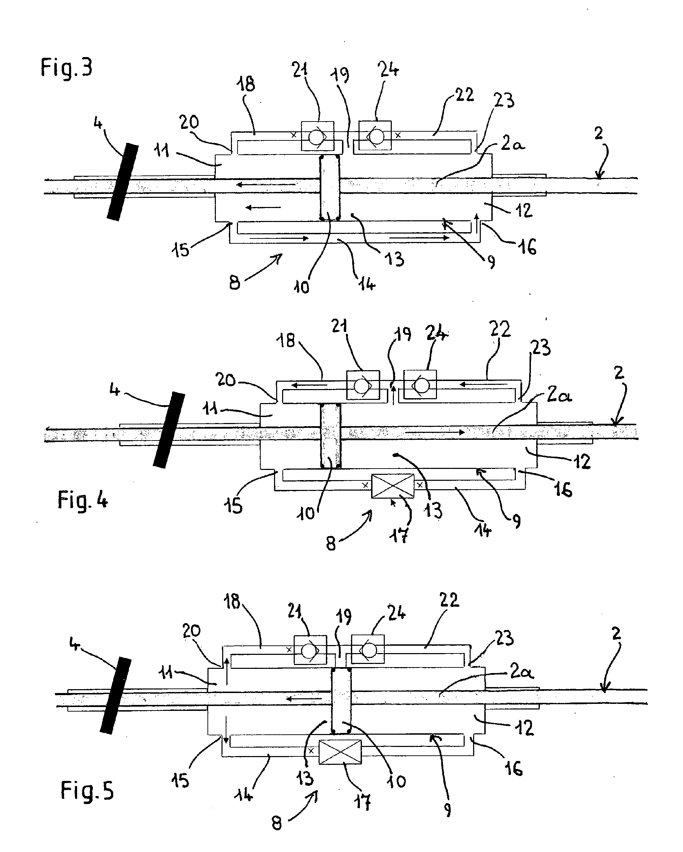

Indépendamment de la colonne de direction et du dispositif d'assistance, le système de direction comprend ici un dispositif de blocage, désigné dans son ensemble par la référence 8, qui est intégré dans le carter de direction 1 à distance du pignon de direction 4, comme représenté sur la figure 2 et comme le schématisent aussi les figures 3 à 5.

Le dispositif de blocage 8 comprend un cylindre 9 formé dans le carter de direction 1, coaxialement à une portion 2a de la crémaillère 2 qui traverse ce cylindre 9 de part en part, suivant son axe. Sur la portion 2a de la crémaillère 2 qui traverse le cylindre 9, est monté un piston 10 dont la périphérie est en contact étanche avec la paroi interne du cylindre 9. Le piston 10 peut ainsi se déplacer en translation, avec la crémaillère 2, entre une première zone d'extrémité 11 du cylindre 9 et une seconde zone d'extrémité 12 du cylindre 9, en passant par une zone centrale 13 de ce cylindre 9.

Le cylindre 9 est rempli d'huile, présente dans les deux chambres de ce cylindre 9, situées de part et d'autre du piston 10. Divers canaux de communication, détaillés ci-après, permettent une circulation de l'huile entre ces deux chambres.

Un premier canal de communication 14 a son point de départ 15 situé dans la première zone d'extrémité 11 du cylindre 9, et son point d'aboutissement 16 situé dans la seconde zone d'extrémité 12 du cylindre 9. Ce canal 14 s'étend parallèlement au cylindre 9, sur toute la longueur de celui-ci. Un moyen de blocage commandé 17, par exemple une électrovanne pilotée, est intercalé sur le canal de communication 14, de manière à autoriser ou interdire la circulation d'huile au travers de ce canal.

Un deuxième canal de communication 18 a son point de départ 19 situé dans la zone centrale 13 du cylindre 9, et son point d'aboutissement 20 situé dans la première zone d'extrémité 11 du cylindre 9. Sur ce canal 18 est intercalé un clapet anti-retour 21, lequel n'autorise la circulation de l'huile que de la zone centrale 13 vers la première zone d'extrémité 11 du cylindre 9.

Un troisième canal de communication 22 a son point de départ 19 confondu avec celui du deuxième canal de communication 18, donc situé dans la zone centrale 13 du cylindre 9, et son point d'aboutissement 23 situé dans la seconde zone d'extrémité 12 du cylindre 9. Sur ce dernier canal 22 est intercalé un autre clapet anti-retour 24, lequel n'autorise la circulation de l'huile que de la zone centrale 13 vers la seconde zone d'extrémité 12 du cylindre 9.

Dans un mode de fonctionnement dit mode « directeur », illustré par la figure 3, le moyen de blocage 17 n'est pas activé et peut être ainsi considéré comme inexistant. Le premier canal de communication 14 permet alors une libre circulation de l'huile entre les deux chambres du cylindre 9, situées de part et d'autre du piston 10, donc une égalisation des pressions entre ces deux chambres, ceci indifféremment du sens de déplacement de la crémaillère 2. Le piston 10 se déplace donc sans effort dans le cylindre 9, en accompagnant les mouvements de la crémaillère 2, cette dernière ne subissant aucun effort parasite.

Dans un autre mode de fonctionnement dit mode « blocage », illustré par les figures 4 et 5, le moyen de blocage 17 est activé par une commande de blocage de direction. Le premier canal de communication 14 est alors obturé, ce qui interdit toute circulation d'huile par ce canal 14 entre les deux zones d'extrémité 11 et 12 du cylindre 9. Seuls les autres canaux de communication 18 et 22 peuvent alors permettre une circulation de l'huile.

Si le piston 10 occupe alors au départ une position non centrée, telle qu'illustrée par la figure 4, l'huile peut circuler dans le canal de communication 18, en passant de la zone centrale 13 à la première zone d'extrémité 11 du cylindre 9, et le piston 10 est ainsi autorisé à se déplacer vers la zone centrale 13. Par contre, compte tenu du sens de montage du clapet anti-retour 21, le refoulement d'huile par le canal 18 est empêché et le piston 10 ne peut revenir en arrière, c'est-à-dire se rapprocher de la première zone d'extrémité 11. Ainsi, à la suite des efforts exercés par les roues sur la crémaillère 2, ou de l'action sur le volant de conduite, ou encore de l'action du dispositif d'assistance, la crémaillère 2 avec le piston 10 se déplacera vers la position médiane.

La figure 5 illustre la situation dans laquelle le piston 10 a atteint sa position médiane, à l'intérieur du cylindre 9. Dans cette position médiane, la périphérie du piston 10 obture le point de départ 19 commun au deuxième canal de communication 18 et au troisième canal de communication 19. Toute circulation d'huile par les différents canaux de communication 14, 18 et 22 se trouve alors interdite, de sorte que le piston 10 reste immobilisé dans sa position médiane, de même que la crémaillère 2 dont le piston 10 est solidaire. Le système de direction se trouve ainsi bloqué, c'est-à-dire que les roues directrices du véhicule ne peuvent plus être orientées. Un fonctionnement symétrique est obtenu si, au départ, le piston 10 se situe de l'autre côté de sa position médiane.

Bien entendu, dès que le moyen de blocage 17 est désactivé, on retrouve la situation de la figure 3 : le piston 10 peut de nouveau se déplacer librement dans le cylindre 9, autrement dit le système de direction est débloqué.

Le dispositif de blocage, décrit ci-dessus en référence au dessin, est adapté pour le blocage des roues directrices avant d'un véhicule automobile, en tant que dispositif antivol. L'invention offre ainsi une alternative aux solutions connues de blocage de la colonne de direction ou du dispositif d'assistance.

Le même dispositif de blocage est aussi utilisable pour le blocage des roues directrices arrière d'un véhicule automobile, pour bloquer temporairement l'orientation de ces roues arrière.

Au lieu d'un blocage strict dans une position médiane, le dispositif de l'invention peut réaliser une limitation du déplacement de la crémaillère, la course autorisée étant fonction de la position des points de départ et d'aboutissement des canaux de communication.

On ne s'écarterait pas du cadre de l'invention, telle que définie dans les revendications annexées :
- en remplaçant l'huile par un autre fluide incompressible approprié ;
- en disposant le cylindre parallèlement à la crémaillère, et non coaxialement, auquel cas le cylindre serait traversé de manière coulissante par une tige liée à la crémaillère ,
- en destinant ce dispositif de blocage à des systèmes de direction de tous types, sans assistance ou avec assistance, celle-ci pouvant agir en tout point du système de direction.

## Revendications

1. Dispositif de blocage pour système de direction à crémaillère de véhicule automobile, le dispositif (8) étant prévu pour empêcher temporairement le mouvement d'orientation d'une paire de roues directrices en imposant une position fixe à une crémaillère (2) associée à cette paire de roues directrices, **caractérisé en ce qu'**il comprend un cylindre (9) fixe rempli d'un fluide incompressible, en particulier d'huile, traversé axialement par une tige mobile (2a) porteuse d'un piston (10) monté coulissant dans le cylindre (9), la tige (2a) formant une portion de la crémaillère (2) ainsi entourée par le cylindre (9), ou ce cylindre s'étendant parallèlement à la crémaillère (2) avec la tige liée à la crémaillère (2), des canaux de communication (14, 18, 22) avec moyens anti-retour (21, 24) et/ou de blocage commandé (17) de la circulation du fluide étant prévus en particulier :
- entre les deux zones d'extrémité (11, 12) du cylindre (9),
- entre la zone centrale (13) du cylindre (9) et l'une de ses zones d'extrémité (11),
- entre la zone centrale (13) du cylindre (9) et son autre zone d'extrémité (12),
de manière à permettre le déplacement de la tige (2a) vers une position médiane, c'est-à-dire une position dans laquelle le piston (10) se situe dans la zone centrale (13) du cylindre (9), le mouvement inverse étant empêché.

2. Dispositif de blocage selon la revendication 1, **caractérisé en ce que** :
- le canal de communication (14) s'étendant entre les deux zones d'extrémité (11, 12) du cylindre (9) comporte un moyen de blocage commandé (17) de la circulation du fluide, ce moyen de blocage étant par exemple une électrovanne pilotée,
- le canal de communication (18) s'étendant entre la zone centrale (13) du cylindre (9) et l'une des zones d'extrémité (11) de ce cylindre (9) comporte un clapet anti-retour (21), n'autorisant la circulation du fluide que de la zone centrale (13) vers cette zone d'extrémité (11),
- le canal de communication (22) s'étendant entre la zone centrale (13) du cylindre (9) et son autre zone d'extrémité (12) comporte un clapet anti-retour (24), n'autorisant la circulation du fluide que de la zone centrale (13) vers cette autre zone d'extrémité (12).

3. Dispositif de blocage selon la revendication 2, **caractérisé en ce que** le point de départ (19) des canaux de communication (18, 22), situé dans la zone centrale (13) du cylindre (9), est commun à ces deux canaux (18, 22), ce point de départ (19) étant obturé par le piston (10) parvenu dans sa position médiane.

4. Dispositif de blocage selon l'une des revendications 1 à 3, **caractérisé en ce que** le cylindre (9) est intégré dans un carter de direction (1) de forme générale tubulaire, dans lequel est montée coulissante la crémaillère (2).

5. Dispositif de blocage selon l'une des revendications 1 à 4, utilisé pour le blocage des roues directrices avant d'un véhicule automobile, en tant que dispositif antivol.

6. Dispositif de blocage selon l'une des revendications 1 à 4, utilisé pour le blocage des roues directrices arrière d'un véhicule automobile, pour bloquer temporairement l'orientation de ces roues arrière.

## Patentansprüche

1. Blockiervorrichtung für ein Zahnstangen-Lenksystem eines Kraftfahrzeugs, wobei die Vorrichtung (8) vorgesehen ist, um durch Erzwingen einer starren Position einer Zahnstange (2), die diesem lenkenden Räderpaar zugeordnet ist, zeitweilig die Ausrichtungsbewegung eines lenkenden Räderpaars zu verhindern, **dadurch gekennzeichnet, dass** sie einen starren Zylinder (9) umfasst, der mit einem nicht komprimierbaren Fluid, insbesondere Öl, gefüllt ist, der axial von einer mobilen Stange (2a) durchquert wird, die einen Kolben (10) trägt, der gleitend in dem Zylinder (9) montiert ist, wobei die Stange (2a) einen Abschnitt der Zahnstange (2) bildet, die derart von dem Zylinder (9) umgeben ist, oder sich dieser Zylinder parallel zu der Zahnstange (2) mit der Stange erstreckt, die mit der Zahnstange (2) verbunden ist, wobei Kommunikationskanäle (14, 18, 22) mit von der Zirkulation des Fluids gesteuerten Rücklaufsperr- (21, 24) und/oder Blockiermitteln (17) insbesondere vorgesehen sind:
- zwischen den zwei Endzonen (11, 12) des Zylinders (9),
- zwischen der zentralen Zone (13) des Zylinders (9) und einer seiner Endzonen (11),
- zwischen der zentralen Zone (13) des Zylinders (9) und seiner anderen Endzone (12),
um die Verlagerung der Stange (2a) in eine Mittelstellung zu erlauben, das heißt in eine Stellung, in der sich der Kolben (10) in der zentralen Zone (13) des Zylinders (9) befindet, wobei die umgekehrte Bewegung verhindert ist.

2. Blockiervorrichtung nach Anspruch 1, **dadurch gekennzeichnet, dass**:
- der Kommunikationskanal (14), der sich zwischen den zwei Endzonen (11, 12) des Zylinders (9) erstreckt, ein von der Zirkulation des Fluids gesteuertes Blockiermittel (17) aufweist, wobei dieses Blockiermittel beispielsweise ein gesteuertes Elektroventil ist,
- der Kommunikationskanal (18), der sich zwischen der zentralen Zone (13) des Zylinders (9) und einer der Endzonen (11) dieses Zylinders (9) erstreckt, ein Rücklaufsperrventil (21) aufweist, das die Zirkulation des Fluids nur von der zentralen Zone (13) zu dieser Endzone (11) erlaubt,
- der Kommunikationskanal (22), der sich zwischen der zentralen Zone (13) des Zylinders (9) und seiner anderen Endzone (12) erstreckt, ein Rücklaufsperrventil (24) aufweist, das die Zirkulation des Fluids nur von der zentralen Zone (13) zu dieser anderen Endzone (12) erlaubt.

3. Blockiervorrichtung nach Anspruch 2, **dadurch gekennzeichnet, dass** der Ausgangspunkt (19) der Kommunikationskanäle (18, 22), der sich in der zentralen Zone (13) des Zylinders (9) befindet, diesen zwei Kanälen (18, 22) gemeinsam ist, wobei dieser Ausgangspunkt (19) von dem Kolben (10), der in seiner Mittelstellung angekommen ist, verschlossen wird.

4. Blockiervorrichtung nach einem der Ansprüche 1 bis 3, **dadurch gekennzeichnet, dass** der Zylinder (9) in ein allgemein rohrförmiges Lenkgehäuse (1) integriert ist, in dem die Zahnstange (2) gleitend montiert ist.

5. Blockiervorrichtung nach einem der Ansprüche 1 bis 4, die zum Blockieren der vorderen Lenkräder eines Kraftfahrzeugs als Diebstahlsicherungsvorrichtung verwendet wird.

6. Blockiervorrichtung nach einem der Ansprüche 1 bis 4, die zum Blockieren der hinteren Lenkräder eines Kraftfahrzeugs als verwendet wird, um zeitweilig die Ausrichtung dieser hinteren Räder zu blockieren.

## Claims

1. A locking device for a rack steering system of a motor vehicle, the device (8) being provided to temporarily prevent the orientation movement of a pair of steering wheels by imposing a fixed position on a rack (2) associated with said pair of steering wheels, **characterized in that** it comprises a stationary cylinder (9) filled with incompressible fluid, in particular oil, axially passed through by a movable rod (2a) supporting a piston (10) slidingly mounted in the cylinder (9), the rod (2a) forming a portion of the rack (2) thus surrounded by the cylinder (9), or said cylinder extending parallel to the rack (2) with the rod connected to the rack (2), communication channels (14, 18, 22) with non-return (21, 24) and/or controlled locking (17) means for the circulation of the fluid being provided in particular:
- between the two end zones (11, 12) of the cylinder (9),
- between the central zone (13) of the cylinder (9) and one of the end zones (11),
- between the central zone (13) of the cylinder (9) and its other end zone (12),
so as to allow the movement of the rod (2a) toward a median position, i.e., a position in which the piston (10) is situated in the central zone (13) of the cylinder (9), the opposite movement being prevented.

2. The locking device according to claim 1, **characterized in that**:
- the communication channel (14) extending between the two end zones (11, 12) of the cylinder (9) includes controlled locking means (17) for the circulation of the fluid, said locking means for example being a controlled solenoid valve,
- the communication channel (18) extending between the central zone (13) of the cylinder (9) and one of the end zones (11) of that cylinder (9) includes a non-return valve (21), only allowing circulation of the fluid from the central zone (13) toward said end zone (11),
- the communication channel (22) extending between the central zone (13) of the cylinder (9) and its other end zone (12) includes a non-return valve (24), only allowing circulation of the fluid from the central zone (13) toward said other end zone (12).

3. The locking device according to claim 2, **characterized in that** the starting point (19) of the communication channels (18, 22), situated in the central zone (13) of the cylinder (9), is shared by said two channels (18, 22), said starting point (19) being covered by the piston (10) having reached the median position thereof.

4. The locking device according to one of claims 1 to 3, **characterized in that** the cylinder (9) is integrated into a generally tubular steering gearbox (1), in which the rack (2) is slidingly mounted.

5. The locking device according to one of claims 1 to 4, used to lock the front steering wheels of a motor vehicle, as an anti-theft device.

6. The locking device according to one of claims 1 to 4, used to lock the rear steering wheels of the motor vehicle, to temporarily lock the orientation of those rear wheels.
